# EUROPÄISCHE PATENTSCHRIFT

(11) **EP 2 793 332 B1**
(45) Veröffentlichungstag und Bekanntmachung des Hinweises auf die Patenterteilung: **12.08.2015**
(21) Anmeldenummer: 13164534.3
(22) Anmeldetag: 19.04.2013
(51) Int. Cl.: H02B 1/21

(54) **Elektrisches Installationsgerät**
Electric installation device
Appareil d'installation électrique

(43) Veröffentlichungstag der Anmeldung: 22.10.2014
(73) Patentinhaber: Jean Müller GmbH Elektrotechnische Fabrik, 65343 Eltville (DE)
(72) Erfinder: Sobotta, Thomas, 65189 Wiesbaden (DE); Bleuel, Harald, 65375 Oestrich-Winkel (DE)
(74) Vertreter: Quermann, Helmut

(56) Entgegenhaltungen:
- EP-A1- 2 026 429
- AT-A4- 506 801

## Beschreibung

Die Erfindung betrifft ein elektrisches Installationsgerät, mit einem Gehäuse und mindestens einem Haken auf einer Rückseite des Installationsgeräts, wobei das Installationsgerät mittels des Hakens an einer Sammelschiene befestigbar ist, wobei der Haken, zum Wechsel einer Abgangsseite des Installationsgeräts, von einer ersten Stellung in eine entgegengesetzt zu dieser angeordneten zweiten Stellung verbringbar ist, sowie der Haken in einer Aufnahme gehalten und mit einer Stromschiene des Installationsgeräts verbindbar ist.

Ein derartiges elektrisches Installationsgerät ist insbesondere mit mehreren Haken versehen, zum Befestigen des jeweiligen Hakens an einer Sammelschiene eines Sammelschienensystems.

Bei dem elektrischen Installationsgerät handelt es sich beispielsweise um einen ein- oder mehrpoligen NH-Sicherungslasttrennschalter oder eine NH-Sicherungslastschaltleiste mit NH-Sicherungskontakten, um einen Klemmenblock, um ein Sicherungselement, aber auch nur um ein Unterteil oder einen Adapter für ein beliebiges elektrisches Installationsgerät.

Die Abgangsrichtung mehrerer nebeneinander in Reihe auf bzw. an den Sammelschienen montierter Geräte ist nach Möglichkeit stets gleich, zum Beispiel immer nach unten oder immer nach oben gewählt. Zuweilen besteht die Notwendigkeit, die Abgangsrichtung für ein einzelnes Installationsgerät zu wechseln.

Die AT 506801 offenbart ein derartiges Installationsgerät.

Unter diesem Aspekt ist ein Installationsgerät der eingangs genannten Art aus der DE 10 2005 042 746 A1 bekannt. Bei diesem bilden die Aufnahme für den Haken und das Gehäuse des Installationsgeräts ein Bauteil. Der Haken ist in der gehäusefesten Aufnahme gehalten, aus der er herausnehmbar ist, wobei er in die Aufnahme, in umgedrehter und somit in 180° gedrehter Stellung wieder eingeführt werden kann. Der Haken weist eine U-förmige Bodenplatte und zwei mit dieser verbundene L-förmige Haken auf. In die Bodenplatte ist eine Klemmschraube eingeschraubt. Diese stützt sich auf einer internen Stromschiene des Installationsgeräts ab. Beim Eindrehen der Klemmschraube drückt sich die Bodenplatte von der Stromschiene weg und zieht somit die L-förmigen Hakenarme in Richtung der internen Stromschiene. Da die äußere Sammelschiene räumlich zwischen den L-förmigen Hakenenden und der internen Stromschiene angeordnet wird, wird bei genügender Drehung der Klemmschraube die elektrische Verbindung zwischen der internen Stromschiene und der äußeren Sammelschiene durch Klemmung hergestellt. Die Lagerung des Hakens erfordert eine besondere Gestaltung des Gehäuses. Dieses weist Führungs-Halte-Schienen auf, von denen der Haken festgeklemmt und gehalten wird. Der Haken kann in den zwei um 180° zueinander verdrehten Orientierungen in die Aufnahme zwischen die Führungs-Halte-Schienen eingeführt werden. Diese komplexe Gestaltung des Gehäuses unter dem Aspekt der Lagerung des Hakens bedingt ein ergonomisch recht aufwendiges Handling beim Verbinden von Haken und Gehäuse.

In der EP 1 271 727 A1 ist ein elektrisches Installationsgerät beschrieben, bei dem der jeweilige Haken, der an einer diesem zugeordneten Sammelschiene befestigbar ist, bezüglich der Abgangsseite des Installationsgeräts in zwei unterschiedlichen Positionen angeordnet werden kann. Hierbei ist der Haken im Installationsgerät selbst drehbar geführt. Der jeweilige Haken ist in einer Aufnahme gehalten, die um eine Achse um 180° schwenkbar in einem Gehäuse des Installationsgeräts gelagert ist. Hierbei ist die Aufnahme teilweise zylindrisch ausgebildet.

Aufgabe der vorliegenden Erfindung ist es, ein elektrisches Installationsgerät der eingangs genannten Art so weiterzubilden, dass, bei einfacher baulicher Gestaltung des Gehäuses, ein einfaches Umrüsten des Installationsgeräts bezüglich der Anordnung der Haken möglich ist.

Gelöst wird die Aufgabe dadurch, dass das Gehäuse und die Aufnahme separate Bauteile sind, wobei die Aufnahme in einem Kanal des Gehäuses verschieblich gelagert ist und die Stromschiene des Installationsgeräts sich in Längsrichtung des Kanals erstreckt, wobei die Aufnahme mit dem Haken in einer Funktionsstellung im Bereich der Stromschiene angeordnet und in Längsrichtung des Kanals festgelegt ist, sowie die Aufnahme mit dem Haken in einer Nichtfunktionsstellung außerhalb des Bereichs der Stromschiene angeordnet ist.

Bei dem erfindungsgemäßen Installationsgerät stellen die Aufnahme und der Haken somit eine Funktionseinheit unabhängig von dem Gehäuse dar. Das Gehäuse dient der Aufnahme, Lagerung und Positionierung der Einheit von Aufnahme und Haken. Dies ermöglicht es, diese Einheit aus Aufnahme und Haken in unterschiedlichen Positionen, vorstehend den zwei um 180° geschwenkten Positionen anzuordnen, und im Gehäuse zu positionieren, sodass die Abgangsseite des Installationsgeräts durch Änderung der Position des Hakens geändert werden kann. Um dies zu erreichen, kann das Gehäuse baulich recht einfach gestaltet sein, da es nur erforderlich ist, das Gehäuse derart auszubilden, dass die Einheit von Aufnahme und Haken von der Nichtfunktionsstellung in die Funktionsstellung und umgekehrt verbracht werden kann, sowie Mittel vorzusehen, die eine Verschiebung der Aufnahme bezüglich des Gehäuses und die Positionierung und Festlegung der Aufnahme im Gehäuse in der Funktionsstellung von Aufnahme und Haken gewährleisten.

Da die Aufnahme im Gehäuse verschieblich ist, kann die Aufnahme mit dem Haken aus der Funktionsstellung im Bereich der Stromschiene in die Nichtfunktionsstellung außerhalb des Bereichs der Stromschiene überführt werden. In dieser Nichtfunktionsstellung kann die Aufnahme aus dem Kanal herausgenommen werden und der Haken von der ersten Stellung in die entgegengesetzt zu dieser angeordnete zweiten Stellung verbracht werden. Nach dem Einsetzen der gedrehten Aufnahme in den Kanal, kann die Aufnahme im Kanal in die Funktionsstellung überführt werden. In dieser ist die Aufnahme mit dem Haken im Bereich der Stromschiene angeordnet und in Längsrichtung des Kanals festgelegt. Insbesondere ist die Aufnahme in der Funktionsstellung in beiden Richtungen festgelegt, somit, bezogen auf die Kanalerstreckung, sowohl in Einschubrichtung als auch in Ausziehrichtung festgelegt.

Es ist insbesondere vorgesehen, dass sich die Stromschiene, in der Funktionsstellung der Aufnahme, bis zu derjenigen Begrenzung der Aufnahme erstreckt, die der Position der Aufnahme in deren Nichtfunktionsstellung zugewandt ist. Demzufolge weist die Stromschiene eine relativ große Länge auf, die ausreichend ist, um die Sammelschiene zwischen der Stromschiene und dem Haken zu klemmen; andererseits ist die Länge der Stromschiene so bezüglich deren Länge auf die Abmessung der Aufnahme in dieser Richtung abgestimmt, dass zum Überführen der Aufnahme von der Funktionsstellung in die Nichtfunktionsstellung die Länge des Kanals relativ gering bemessen ist.

Gemäß einer baulich besonders einfachen Gestaltung des Gehäuses ist vorgesehen, dass der Kanal einen ebenen Boden und zwei senkrecht zu diesem angeordnete, parallel zueinander angeordnete Führungswandungen aufweist. Der Boden und die beiden Führungswandungen ermöglichen eine definierte Führung der Auflage, die auf dem Boden aufliegt und mit geringem Führungsspiel zwischen den Führungswandungen angeordnet ist.

Vorzugsweise weist der Kanal eine senkrecht zum Boden und senkrecht zu den Führungswandungen angeordnete Stirnwandung auf. Diese Stirnwandung stellt einen Anschlag für die Aufnahme in deren Funktionsstellung dar. Gemäß einer bevorzugten Weiterbildung ist vorgesehen, dass der Kanal zwei senkrecht zum Boden und senkrecht zu den Führungswandungen angeordnete, parallel zueinander angeordnete Stirnwandungen aufweist. Die eine Stirnwandung stellt den genannten Anschlag für die Aufnahme in der Funktionsstellung dar, während die andere Stirnwandung eine Begrenzung der Verschiebebewegung der Aufnahme beim Überführen aus der Funktionsstellung darstellt, somit die Aufnahme in der Nichtfunktionsstellung positioniert.

Die Aufnahme ist vorzugsweise derart gestaltet, dass sie einen bezüglich deren Außenkontur quaderförmigen Basisabschnitt aufweist. Diese Gestaltung der Aufnahme mit dem Basisabschnitt ermöglicht, bei einfacher geometrischer Gestaltung des Basisabschnitts, eine einfache und präzise Führung des Basisabschnitts und damit der Aufnahme im Kanal. Insbesondere kontaktiert der Basisabschnitt in seiner in den Kanal eingesetzten Stellung den Boden und ist mittels der Führungswandungen geführt.

Vorzugsweise ist die Aufnahme derart gestaltet, dass sie einen mit dem Basisabschnitt verbundenen Hakenabschnitt aufweist. Insbesondere ist die Aufnahme durch den Basisabschnitt und den Hakenabschnitt gebildet.

Die Aufnahme besteht insbesondere aus Kunststoff. Es wird als besonders vorteilhaft angesehen, wenn die Aufnahme als Kunststoffspritzgussteil ausgebildet ist. Somit lässt sich auf einfache Art und Weise die spezifische Form der Aufnahme herstellen.

Es ist insbesondere vorgesehen, dass der Haken in der Aufnahme geklemmt gehalten ist. Der Haken ist somit in der Aufnahme gehalten, kann aber durch Aufbringen einer definierten Kraft zwischen Haken und Aufnahme relativ zur Aufnahme verschoben werden.

Der Haken ist insbesondere derart gestaltet, dass er eine Bodenplatte, zwei mit dieser verbundene L-förmige Hakenarme, die identisch orientiert sind, sowie eine die Bodenplatte durchsetzende, in Kontakt mit der Stromschiene bringbare Klemmschraube aufweist, wobei die Sammelschiene zwischen der Stromschiene und parallel zu dieser angeordneten Abschnitten der Hakenarme klemmbar ist. Insbesondere ist vorgesehen, dass der Haken parallel zur Bodenplatte verschieblich in der Aufnahme geführt ist. Diese Gestaltung ist auch vor dem Hintergrund der geklemmten Halterung des Hakens in der Aufnahme zu sehen, da zum Befestigen des Installationsgeräts an der Sammelschiene die Sammelschiene zwischen den L-förmigen Hakenarmen und der die Bodenplatte durchsetzenden Klemmschraube geklemmt wird, womit sich infolge des Verstellens der Klemmschraube der Haken bzw. die Bodenplatte bezüglich der Aufnahme verschiebt.

Insbesondere ist die Bodenplatte im Bereich des Basisabschnitts der Aufnahme angeordnet und es sind die L-förmigen Hakenarme im Bereich des Hakenabschnitts der Aufnahme angeordnet.

Unter dem Aspekt der Anordnung der Stromschiene wird es als vorteilhaft angesehen, wenn diese parallel zum Boden des Kanals positioniert ist und der Abstand der Stromschiene vom Boden des Kanals geringfügig größer ist als die Erstreckung des Basisabschnitts der Aufnahme zwischen dem Boden und der Stromschiene. Diese Gestaltung gewährleistet es, dass der Basisabschnitt der Aufnahme beim Verbringen von Aufnahme und Haken von der Funktionsstellung in die Nichtfunktionsstellung bzw. umgekehrt, in geringem Abstand zur Stromschiene im Kanal bewegt werden kann. Ein Entnehmen der Aufnahme, ausgehend von deren Funktionsstellung, in eine Richtung senkrecht zum Boden des Kanals ist infolge der dort befindlichen Stromschiene nicht möglich.

Vorzugsweise ist die Aufnahme in der Funktionsstellung zwischen einer der Stirnwandungen und einem Festlegmittel, das einer der Führungswandungen zugeordnet ist, festgelegt. Diese Gestaltung ermöglicht auf baulich einfache Art und Weise ein präzises Festlegen der Aufnahme in Einfahr- und Ausfahrrichtung. Hierbei ist insbesondere ein Teilbereich einer der Führungswandungen federnd nachgiebig und dieser Teilbereich weist einen Vorsprung auf, der in entspannter Stellung des Teilbereichs die Aufnahme in der Funktionsstellung hintergreift. Es ist somit nur erforderlich, die Aufnahme von der Nichtfunktionsstellung in die Funktionsstellung im Kanal zu bewegen, bis bei Erreichen der Funktionsstellung der Aufnahme, der federnde Vorsprung sich entspannen kann und damit die Aufnahme entgegen der Einfahrrichtung festlegt. Um diese Festlegung aufzuheben, ist es nur erforderlich, den Vorsprung von Hand entgegen der Rückstellkraft, die auf den Vorsprung einwirkt, geringfügig zurückzubewegen, sodass dann der Vorsprung nicht mehr in den Ausfahrweg der Aufnahme vorsteht.

Weitere Merkmale der Erfindung sind in den Unteransprüchen, der Beschreibung der Zeichnung und der Zeichnung selbst dargestellt, wobei bemerkt wird, dass alle Einzelmerkmale und alle Kombinationen von Einzelmerkmalen erfindungswesentlich sind.

In der Zeichnung ist die Erfindung anhand eines bevorzugten Ausführungsbeispiels dargestellt, ohne hierauf beschränkt zu sein. Es stellt dar:
- Fig. 1: ein elektrisches Installationsgerät, das als Niederspannungs-Hochleistungs-Sicherungsschaltgerät (NH-Sicherungsschaltgerät) ausgebildet ist, wobei das Installationsgerät auf einem Sammelschienensystem montiert ist, in einer räumlichen Darstellung veranschaulicht, schräg von oben auf einen Gerätedeckel des instahationsgeräts gesehen,
- Fig. 2: die in Fig. 1 gezeigte Anordnung, in einer räumlichen Darstellung gezeigt, schräg von unten, somit auf das Sammelschienensystem gesehen, veranschaulicht für drei die jeweilige Sammelschiene hintergreifende Haken, die in einer ersten Stellung in einem Gehäuse des Installationsgeräts angeordnet sind,
- Fig. 3: die Anordnung gemäß Fig. 2, wobei die Haken in einer entgegengesetzt zu dieser ersten Stellung angeordneten zweiten Stellung angeordnet sind,
- Fig. 4: die bei dem Installationsgerät jeweils Verwendung findende Anordnung von Haken und diesem zugeordneter Aufnahme, veranschaulicht in einer räumlichen Darstellung, bei separater Anordnung von Haken und Aufnahme,
- Fig. 5: die Anordnung gemäß Fig. 4, veranschaulicht in zusammengebautem Zustand, in einer räumlichen Ansicht,
- Fig. 6: das Installationsgerät in einer räumlichen Darstellung, schräg von unten gesehen, bei jeweils demontierter Anordnung von Aufnahme und Haken, veranschaulicht für die erste Stellung von Aufnahme und Haken,
- Fig. 7: für die Anordnung von Aufnahme und Haken gemäß Fig. 6 eine in Funktionsstellung im Gehäuse gelagerte Aufnahme, veranschaulicht in einer räumlichen Darstellung,
- Fig. 8: das Installationsgerät in einer räumlichen Darstellung, schräg von unten gesehen, bei jeweils demontierter Anordnung von Aufnahme und Haken, veranschaulicht für die zweite Stellung von Aufnahme und Haken,
- Fig. 9: für die Anordnung von Aufnahme und Haken gemäß Fig. 8 eine in Funktionsstellung im Gehäuse gelagerte Aufnahme, veranschaulicht in einer räumlichen Darstellung.

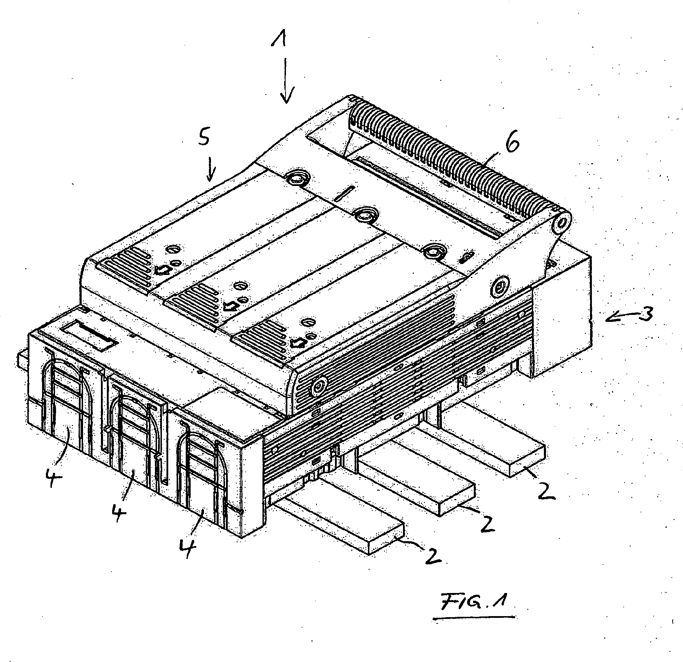

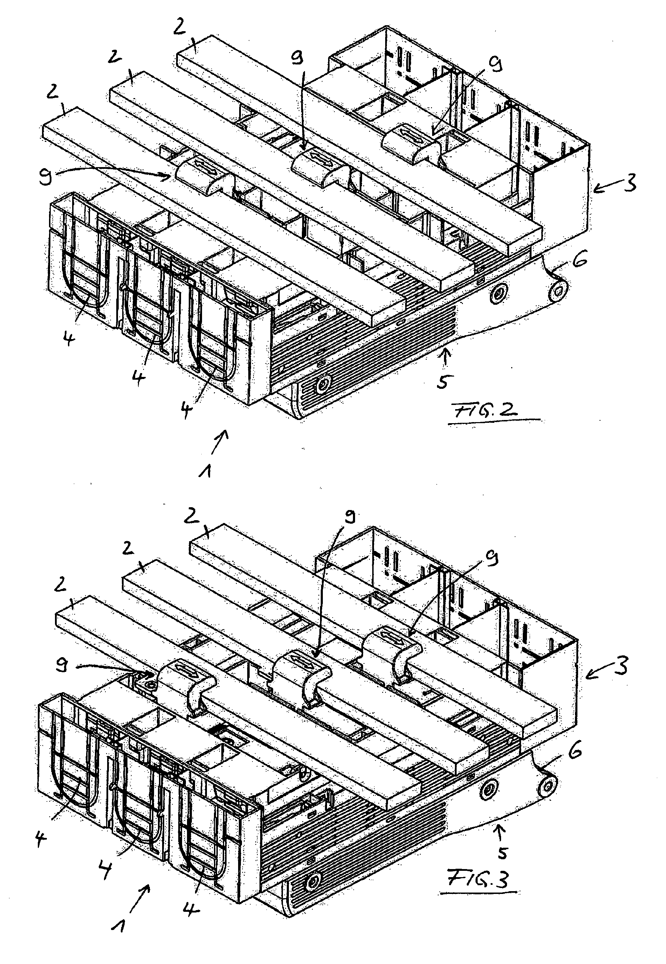

Fig. 1 zeigt ein elektrisches Installationsgerät 1, das als NH-Sicherungsschaltgerät 1 ausgebildet ist. Dieses dient dem Absichern dreier Phasen R, S, T und ist mit einem drei Sammelschienen 2 aufweisenden Sammelschienensystem verbunden ist. Die Sammelschienen 2 sind parallel zueinander und horizontal zueinander angeordnet und nur über eine Teillänge veranschaulicht. Das Sicherungsschaltgerät 1 weist ein Geräteunterteil 3 aus Kunststoff mit sechs in diesem gelagerten Kontakten mit Anschlussklemmen auf. Jede Phase weist zwei Kontakte zum Einstecken eines NH-Sicherungseinsatzes auf, ferner einen mit dem jeweiligen Kontakt verbundenen Anschluss, wobei der eine Anschluss mit einer Sammelschiene 2 und der andere Anschluss mit einem Stromkabel verbunden ist. Dieses wird auf der Ober- oder Unterseite des Geräteunterteils 3 herausgeführt. Veranschaulicht sind drei herausbrechbare Deckelemente 4, durch die bei herausgebrochenem Deckelelement 4 jeweils ein Anschlusskabel aus dem Geräteunterteil 3 herausgeführt werden kann. Im Geräteunterteil 3 ist schwenkbar ein Gerätedeckel 5 gelagert, der im Bereich seines der Schwenkachse abgewandten Endes eine parallel zur Schwenkachse angeordnete Griffstange 6 aufweist. Beispielsweise ist das Sicherungsschaltgerät so angeordnet, dass die Griffstange 6 im oberen Bereich des Sicherungsschaltgeräts 1 (Fig. 2) oder im unteren Bereich des Sicherungsschaltgeräts (Fig. 3) angeordnet ist, wobei die drei Sammelschienen 2 jeweils horizontal verlaufend angeordnet sind und die Anordnung der Sammelschienen in einer vertikalen Ebene erfolgt.

Das Geräteunterteil 3 weist ein Gehäuse 7 auf, das als Kunststoffspritzgussteil ausgebildet ist.

Befestigt wird das Sicherungsschaltgerät 1 an den drei Sammelschienen 2 mittels dreier Haken 8 aus Metall, wobei jeder Haken 8, seitlich auf die Sammelschiene 2 aufgesteckt, in Wirkverbindung mit dieser bringbar ist.

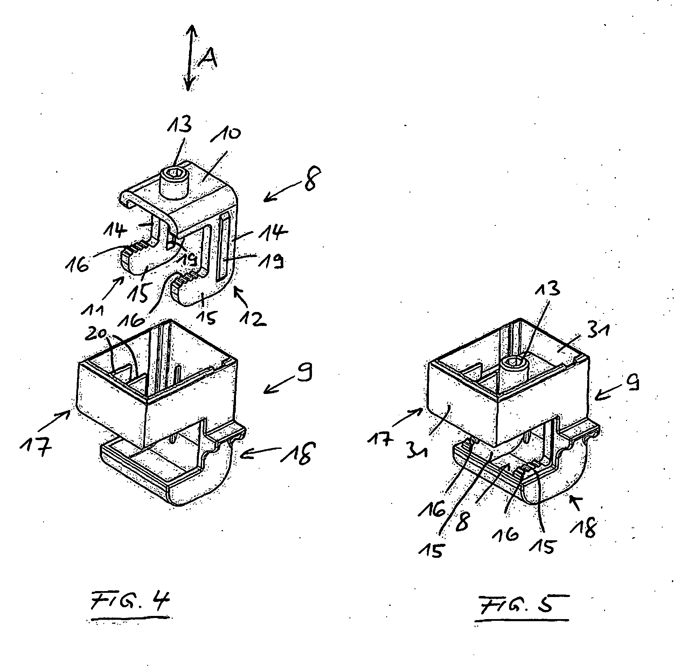

Die Gestaltung des Hakens 8 und dessen Zusammenwirken mit einer Aufnahme 9 ist in den Fig. 4 und 5 veranschaulicht. Der Haken 8 weist eine Bodenplatte 10, zwei mit dieser verbundene L-förmige Hakenarme 11, 12, die identisch orientiert sind, sowie eine die Bodenplatte 10 durchsetzende Klemmschraube 13 auf. Bei den jeweiligen L-förmigen Hakenarmen 11 bzw. 12 ist ein Schenkel im Bereich eines Endes mit der Bodenplatte 10 und ein anderer Schenkel 15 im Bereich des der Bodenplatte 10 abgewandten Endes des Schenkels 14 mit diesem verbunden. Der Schenkel 15 ist hierbei parallel zur Bodenplatte 10 angeordnet und weist auf seiner der Bodenplatte 10 zugewandten Seite eine profilierte Oberfläche 16 auf.

Die Aufnahme 9 ist durch einen bezüglich deren Außenkontur quaderförmigen Basisabschnitt 17 und einen mit diesem verbundenen Hakenabschnitt 18 gebildet. Durch das im Bereich des Basisabschnitts 17 offene Ende der Aufnahme 9 ist der dieser Aufnahme 9 zugeordnete Haken 8 in die Aufnahme 9 eingesteckt, wobei in der eingesteckten Stellung, wie sie der Fig. 4 zu entnehmen ist, die Bodenplatte 10 des Hakens 8 im Bereich des Basisabschnitts 17 und die Hakenarme 11, 12 der Aufnahme 9 im Bereich des Hakenabschnitts 18 der Aufnahme 9 platziert sind. Beim Bewegen des Hakens 8, in Richtung des Doppelpfeils A gemäß Fig. 4 relativ zur Aufnahme 9, werden die Schenkel 14 im Bereich dort angebrachter, äußerer, in Längsrichtung der Schenkel 14 verlaufender Vorsprünge 19 am Basisabschnitt 17 der Aufnahme 9 geführt. Ferner werden die Schenkel 14 stirnseitig, auf ihrer dem Schenkel 15 abgewandten Seite, am Basisabschnitt 17 geführt und überdies die Bodenplatte 10 mittels Vorsprüngen 20 des Basisabschnitts 17. Diese diversen Führungen sind derart gestaltet, dass der Haken 8 geklemmt in der Aufnahme 9 gehalten ist. Der Haken 8 ist parallel zu Bodenplatte 10 verschieblich in der Aufnahme 9 geführt. Die Aufnahme 9 ist als Kunststoffspritzgussteil ausgebildet.

Die Bodenplatte 10 ist somit im Bereich des Basisabschnitts 17 angeordnet und die L-förmigen Hakenarme 11, 12 sind im Bereich des Hakenabschnitts 18 angeordnet. Die Anordnung aus jeweiligen Haken 8 und diesem zugeordneter Aufnahme 9 lässt sich in zwei jeweils um 180° zueinander verdrehten Positionen im Gehäuse 7 des Sicherungsschaltgeräts 1 montieren. Dies ist aufgrund der Ausbildung des im Querschnitt rechteckigen Basisabschnitts 17 möglich. Je nach Montageanordnung ragen somit die Schenkel 15 der Hakenarme 11, 12 und demzufolge die Hakenabschnitte 18 der Aufnahme 9 in die eine Richtung oder in die entgegengesetzt zu dieser einen Richtung angeordnete Richtung.

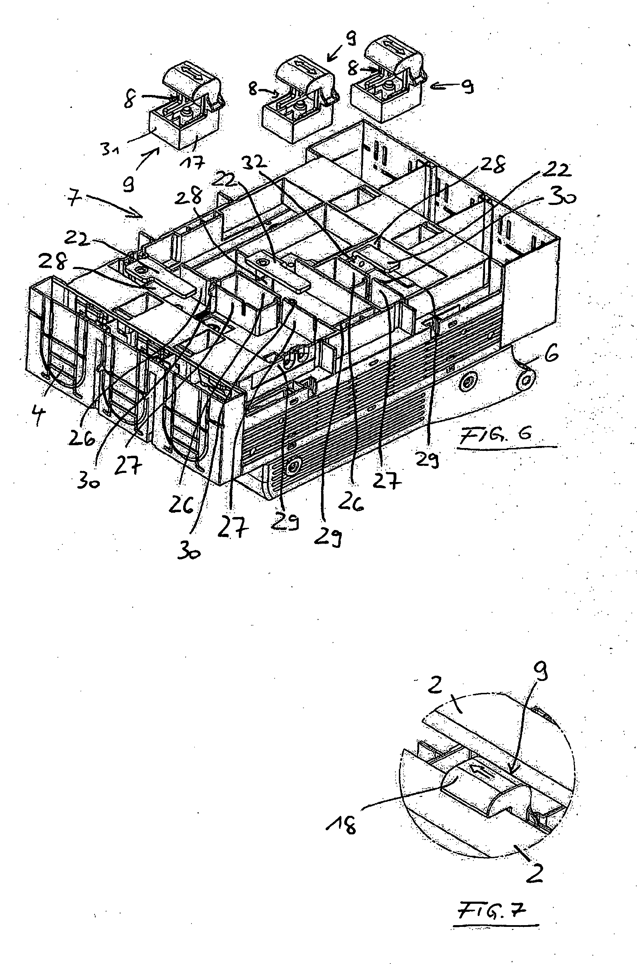

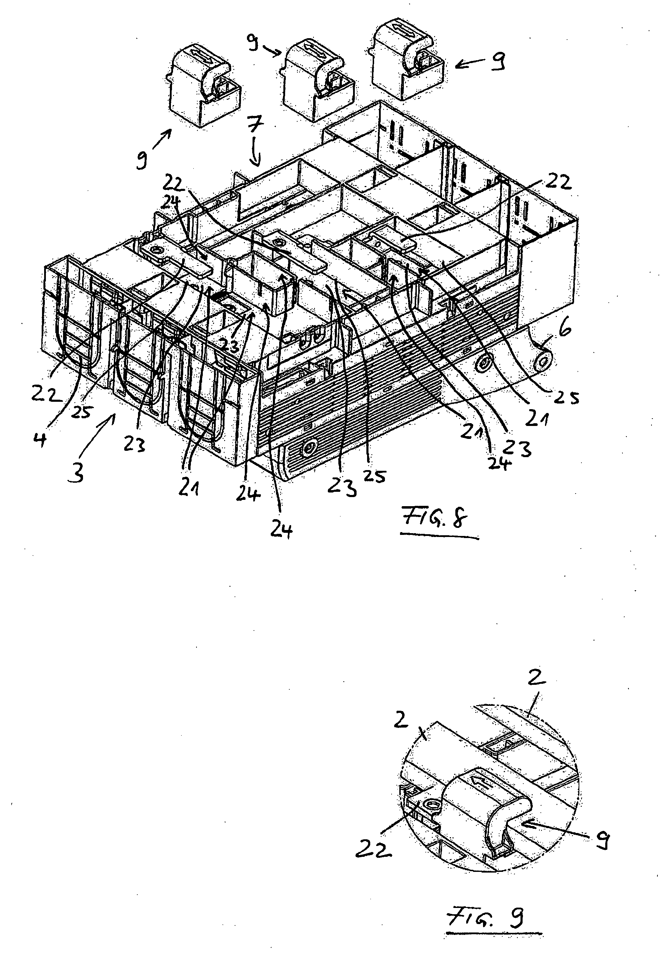

Diese unterschiedliche Montagemöglichkeit der jeweiligen Anordnung von Haken 8 und Aufnahme 9 ist in den Fig. 6 und 7 für die eine Montagerichtung und in den Fig. 8 und 9 für die entgegengesetzte Montagerichtung von Anordnung von Haken 8 und Aufnahme 9 veranschaulicht.

Der Fig. 6 ist zu entnehmen, dass das Gehäuse 7, bei dem es sich im Wesentlichen um das Geräteunterteil 3 handelt, und die jeweilige Aufnahme 9 separate Bauteile sind. Die jeweilige Aufnahme 9 ist in einem der jeweiligen Aufnahme zugeordneten Kanal 21 des Gehäuses 7 verschieblich gelagert. Dieser erstreckt sich parallel zur Längserstreckung der Griffstange 6. Eine der jeweiligen Phase R, S, T des Sicherungsschaltgeräts 1 zugeordnete Stromschiene 22 des Sicherungsschaltgeräts 1 erstreckt sich in Längsrichtung des Kanals 21 über einen Teilbereich des Kanals 21. Der Kanal 21 weist einen ebenen Boden 23 und zwei senkrecht zu diesem angeordnete, parallel zueinander angeordnete Führungswandungen 24, 25 auf. Die Führungswandung 25 ist starr, während die Führungswandung 24 einen starren Wandungsabschnitt 26 und einen senkrecht zur Wandungsebene nachgiebigen Wandungsabschnitt 27 aufweist, der seitlich, oben durch Schlitze begrenzt ist. Zur besseren Veranschaulichung sind diese Wandungsabschnitte 26, 27 in Fig. 6 beziffert. Ferner weist der Kanal 21 zwei senkrecht zum Boden 23 und senkrecht zu den Führungswandungen 24, 25 angeordnete, parallel zueinander angeordnete Stirnwandungen 28, 29 auf, die gleichfalls in der Fig. 6 beziffert sind.

Wegen der beidseitig der des Wandungsabschnitts 27 angeordneten Schlitze ist der obere Bereich des Wandungsabschnitts 27 unter Einwirkung einer manuellen Betätigungskraft nachgiebig. Der Wandungsabschnitt 27 weist im Bereich seines dem Wandungsabschnitt 26 zugewandten Endes, auf der dem Kanal 21 zugewandten Seite, im oberen Bereich einen Vorsprung 30 auf. Bei nicht manuell betätigtem Wandungsabschnitt 27 und damit zurückfederndem Wandungsabschnitt 27 ragt der Vorsprung 30 über die dem Kanal 21 zugewandte, aus dem Wandungsabschnitt 26 und dem Wandungsabschnitt 27 gebildete Ebene hinaus und dient damit als Festlegemittel.

Die jeweilige Stromschiene 22 erstreckt sich, ausgehend von der dieser zugeordneten Stirnwandung 28, bis etwa zum Übergang von dem starren Wandungsabschnitt 26 zum nachgiebigen Wandungsabschnitt 27. Hierbei sind zwei der drei Stromschienen 23 über die Stirnwandung 28 in den dem Kanal 21 abgewandten Bereich des Gehäuses 7 verlängert. Eine der Stromschienen 22 hingegen weist einen abgeknickten Ansatz auf, der auf der Kanalseite der Stirnwandung 28 angeordnet ist und senkrecht zum Boden 23 verläuft.

Bezogen auf die Positionierung der Anordnung von Aufnahme 9 und Haken 8, gemäß Darstellung in Fig. 6, wird nachfolgend die Montage der Aufnahme 9 im Gehäuse 7 beschrieben: Es wird die Aufnahme 9 mit deren Basisabschnitt 17, bei Erstreckung der Schenkel 15 des Hakens 8 mit deren freien Enden in Richtung der Deckelelemente 4, im Bereich des Wandungsabschnitts 27 in den Kanal 21 eingesetzt, benachbart zur plattenförmigen Stromschiene 22, die mit ihrer Hauptebene parallel zum Boden 23 des Kanals 21 positioniert ist. In dieser Stellung liegt der Basisabschnitt 17 der Bodenplatte 10 am Boden 23 des Kanals an und es sind die beiden kleineren, parallel zueinander angeordneten Wandungsabschnitte 31 des Basisabschnitts 17 mittels der Führungswandurigen 24 und 25 geführt. Es wird dann die Anordnung von Aufnahme 9 und Haken 8 in Richtung des zur jeweiligen Anordnung (beispielsweise in Fig. 7) veranschaulichten einen Pfeils in Richtung dem Kanal 21 zugeordneten Stromschiene 22 verschoben, aus der eingesteckten Nichtfunktionsstellung in die Funktionsstellung der Anordnung, in der, betreffend die drei Phasen, die beiden Basisabschnitte 17 an den Stirnwandungen 28 und der dritte Basisabschnitt 17 an dem Ansatz 32 der dritten Stromschiene 22 anliegt. Beim Verschieben der Aufnahme 9 von der Nichtfunktionsstellung in die Funktionsstellung, drückt der Basisabschnitt 17 den Vorsprung 30, der am Wandungsabschnitt 27 angebracht ist, zurück und es bewegt sich dieser Wandungsabschnitt 27 zusammen mit dem Vorsprung 30 in die entspannte Stellung zurück, wenn die Aufnahme 9 die Funktionsstellung erreicht hat und demzufolge gerade außer Kontakt mit dem Vorsprung 30 gelangt ist.

Auf diese Art und Weise werden, wie zur Fig. 6 und der Fig. 7 verdeutlicht, alle drei Aufnahmen 9 mit dazugehörigen Haken 8 gleichgerichtet im Gehäuse 7 in den Kanälen 21 platziert. Zum Wechsel der Abgangsseite des Sicherungsschaltgeräts 1, demnach zum Überführen der Aufnahme 9 mit Haken 8 von der vorstehend beschriebenen ersten Stellung in die entgegengesetzt zu dieser Stellung angeordnete zweite Stellung, wird die jeweilige Anordnung von Haken 8 und Aufnahme 9 vom Gehäuse 7 demontiert, indem manuell eine Kraft auf den nachgiebigen Wandungsabschnitt 27 ausgeübt wird, womit der Vorsprung 30 dieses Wandungsabschnitts 27 aus dem Bewegungsweg des Basisabschnitts 17 der Aufnahme 9 gelangt und die Aufnahme 9 infolge dessen aus der Funktionsstellung von der Stirnwandung 28 wegverschoben werden kann, in Längserstreckung des Kanals 21, bis aus dem Bereich der Stromschiene 22 hinaus, sodass die Anordnung von Aufnahme 9 und Haken 8 dort aus dem Kanal 21 entnommen werden kann. Die Stirnwandung 29 kann hierbei als Anschlag beim Verfahren der Aufnahme 9 aus der Funktionsstellung dienen.

Die aus dem Gehäuse 7 herausgenommene Anordnung von Haken 8 und Aufnahme 9 wird dann, wie zur Fig. 8 veranschaulicht, um 180° gedreht und es erfolgt dann das Einsetzen dieser Anordnung in den Kanal 21 und das Verschieben der Anordnung von der Nichtfunktionsstellung in die Funktionsstellung, wie vorstehend zu den Fig. 6 und 7 beschrieben.

Befestigt und leitend verbunden wird das Sicherungsschaltgerät 1, unabhängig in welcher Funktionsstellung sich die jeweilige Anordnung von Haken 8 und Aufnahme 9 befindet, indem die drei Haken 8, wie zur Darstellung der Fig. 2 und 3 veranschaulicht, auf die drei Sammelschienen 2 von oben aufgesteckt werden. Die jeweilige Sammelschiene 2 ist dabei zwischen den profilierten Oberflächen 16 der Schenkel 15 des Hakens und der Stromschiene 22 positioniert. Durch Zustellen bzw. Eindrehen der Klemmschraube 13 mit deren den Oberflächen 16 bzw. der Stromschiene 22 zugewandten Ende, wird die Bodenplatte 10 des Hakens 8 von der Stromschiene 22 wegbewegt und damit die Sammelschiene 2 zwischen der Stromschiene 22 und den profilierten Oberflächen 16 des Hakens 8 geklemmt.

### Bezugszeichenliste

- 1: Sicherungsschaltgerät
- 2: Sammelschiene
- 3: Geräteunterteil
- 4: Deckelelement
- 5: Geräteunterteil
- 6: Griffstange
- 7: Gehäuse
- 8: Haken
- 9: Aufnahme
- 10: Bodenplatte
- 11: Hakenarm
- 12: Hakenarm
- 13: Klemmschraube
- 14: Schenkel
- 15: Schenkel
- 16: Oberfläche
- 17: Basisabschnitt
- 18: Hakenabschnitt
- 19: Vorsprung
- 20: Vorsprung
- 21: Kanal
- 22: Stromschiene
- 23: Boden
- 24: Führungswandung
- 25: Führungswandung
- 26: Wandungsabschnitt
- 27: Wandungsabschnitt
- 28: Stirnwandung
- 29: Stirnwandung
- 30: Vorsprung
- 31: Wandungsabschnitt
- 32: Ansatz

## Patentansprüche

1. Elektrisches Installationsgerät (1), mit einem Gehäuse (7) und mindestens einem Haken (8) auf einer Rückseite des Installationsgeräts (1), wobei das Installationsgerät (1) mittels des Hakens (8) an einer Sammelschiene (2) befestigbar ist, wobei der Haken (8), zum Wechsel einer Abgangsseite des Installationsgeräts (1), von einer ersten Stellung in eine entgegengesetzt zu dieser angeordnete zweite Stellung verbringbar ist, sowie der Haken (8) in einer Aufnahme (9) gehalten und mit einer Stromschiene (22) des Installationsgeräts verbindbar ist, **dadurch gekennzeichnet, dass** das Gehäuse (7) und die Aufnahme (9) separate Bauteile sind, wobei die Aufnahme (9) in einem Kanal (21) des Gehäuses (7) verschieblich gelagert ist und die Stromschiene (22) des Installationsgeräts (1) sich in Längsrichtung des Kanals (21) erstreckt, wobei die Aufnahme (9) mit dem Haken (8) in einer Funktionsstellung im Bereich der Stromschiene (22) angeordnet und in Längsrichtung des Kanals (21) festgelegt ist, sowie die Aufnahme (9) mit dem Haken (8) in einer Nichtfunktionsstellung außerhalb des Bereiches der Stromschiene (22) angeordnet ist.

2. Installationsgerät nach Anspruch 1, **dadurch gekennzeichnet, dass** in der Funktionsstellung der Aufnahme (9), sich die Stromschiene (22) bis zu derjenigen Begrenzung der Aufnahme (9) erstreckt, die einer Position der Aufnahme (9) zugewandt ist, die diese in deren Nichtfunktionsstellung einnimmt.

3. Installationsgerät nach Anspruch 1 oder 2, **dadurch gekennzeichnet, dass** der Kanal (21) einen Boden(23), insbesondere einen ebenen Boden (23), und zwei senkrecht zu diesem angeordnete, parallel zueinander angeordnete Führungswandungen (24, 25) aufweist.

4. Installationsgerät nach Anspruch 3, **dadurch gekennzeichnet, dass** der Kanal (21) zwei senkrecht zum Boden (23) und senkrecht zu den Führungswandungen (24, 25) angeordnete, parallel zueinander angeordnete Stirnwandungen (28, 29) aufweist.

5. Installationsgerät nach einem der Ansprüche 1 bis 4, **dadurch gekennzeichnet, dass** die Aufnahme (9) einen bezüglich deren Außenkontur quaderförmigen Basisabschnitt (17) aufweist.

6. Installationsgerät nach Anspruch 5, **dadurch gekennzeichnet, dass** der Basisabschnitt (17) in seiner in den Kanal (21) eingesetzten Stellung den Boden (23) kontaktiert und mittels der Führungswandungen (24, 25) geführt ist.

7. Installationsgerät nach Anspruch 5 oder 6, **dadurch gekennzeichnet, dass** die Aufnahme (9) einen mit dem Basisabschnitt (17) verbundenen Hakenabschnitt (18) aufweist.

8. Installationsgerät nach einem der Ansprüche 1 bis 7, **dadurch gekennzeichnet, dass** die Aufnahme (9) aus Kunststoff besteht, insbesondere als Kunststoffspritzgussteil ausgebildet ist.

9. Installationsgerät nach einem der Ansprüche 1 bis 8, **dadurch gekennzeichnet, dass** der Haken (8) geklemmt in der Aufnahme (9) gehalten ist.

10. Installationsgerät nach einem der Ansprüche 1 bis 9, **dadurch gekennzeichnet, dass** der Haken (9) eine Bodenplatte (10), zwei mit dieser verbundene L-förmige Hakenarme (11, 12), die identisch orientiert sind, sowie einen die Bodenplatte (10) durchsetzende, in Kontakt mit der Stromschiene (22) bringbare Klemmschraube (13) aufweist, wobei die Sammelschiene (2) zwischen der Stromschiene (22) und parallel zu dieser angeordneten Abschnitten (16) der Hakenarme (11, 12) klemmbar ist.

11. Installationsgerät nach Anspruch 10, **dadurch gekennzeichnet, dass** der Haken (8), parallel zur Bodenplatte (10) verschieblich, in der Aufnahme (9) geführt ist.

12. Installationsgerät nach Anspruch 10 oder 11, **dadurch gekennzeichnet, dass** die Bodenplatte (10) im Bereich des Basisabschnitts (17) der Aufnahme (9) angeordnet ist und die L-förmigen Hakenarme (10, 11) im Bereich des Hakenabschnitts (18) der Aufnahme (9) angeordnet sind.

13. Installationsgerät nach einem der Ansprüche 5 bis 12, **dadurch gekennzeichnet, dass** die Stromschiene (22) parallel zum Boden (23) des Kanals (21) angeordnet ist und der Abstand der Stromschiene (22) vom Boden (23) des Kanals (21) geringfügig größer ist als die Erstreckung des Basisabschnitts (17) der Aufnahme (9) zwischen dem Boden (23) und der Stromschiene (22).

14. Installationsgerät nach einem der Ansprüche 4 bis 13, **dadurch gekennzeichnet, dass** die Aufnahme (9) in der Funktionsstellung zwischen einer der Stirnwandungen (28, 29) und einem Festlegmittel (30), das einer Führungswandung (24) der Führungswandungen (24, 25) zugeordnet ist, festgelegt ist.

15. Installationsgerät nach Anspruch 14, **dadurch gekennzeichnet, dass** ein Teilbereich (27) einer Führungswandung (24) der Führungswandungen (24, 25) federnd nachgiebig ist und dieser Teilbereich (27) einen Vorsprung (30) aufweist, der, in entspannter Stellung des Teilbereichs (27), die Aufnahme (9) in der Funktionsstellung hintergreift.

## Claims

1. Electrical installation device (1), having a housing (7) and at least one hook (8) on a rear face of the installation device (1), wherein the installation device (1) can be fastened to a busbar (2) by means of the hook (8), wherein the hook (8), in order to change an output side of the installation device (1), can be moved from a first position to a second position which is arranged opposite the said first position, and the hook (8) is held in a receptacle (9) and can be connected to a conductor rail (22) of the installation device, **characterized in that** the housing (7) and the receptacle (9) are separate components, wherein the receptacle (9) is mounted in a displaceable manner in a channel (21) in the housing (7), and the conductor rail (22) of the installation device (1) extends in the longitudinal direction of the channel (21), wherein the receptacle (9) with the hook (8), in a functional position, is arranged in the region of the conductor rail (22) and is secured in the longitudinal direction of the channel (21), and the receptacle (9) with the hook (8), in a non-functional position, is arranged outside the region of the conductor rail (22).

2. Installation device according to Claim 1, **characterized in that**, in the functional position of the receptacle (9), the conductor rail (22) extends as far as that boundary of the receptacle (9) which faces a position of the receptacle (9) which the said receptacle assumes in its non-functional position.

3. Installation device according to Claim 1 or 2, **characterized in that** the channel (21) has a bottom (23), in particular a flat bottom (23), and two guide walls (24, 25) which are arranged perpendicular to the said bottom and are arranged parallel to one another.

4. Installation device according to Claim 3, **characterized in that** the channel (21) has two end walls (28, 29) which are arranged perpendicular to the bottom (23) and perpendicular to the guide walls (24, 25) and are arranged parallel to one another.

5. Installation device according to one of Claims 1 to 4, **characterized in that** the receptacle (9) has a cuboidal base section (17) with respect to its outer contour.

6. Installation device according to Claim 5, **characterized in that** the base section (17), in its position in which it is inserted into the channel (21), makes contact with the bottom (23) and is guided by means of the guide walls (24, 25).

7. Installation device according to Claim 5 or 6, **characterized in that** the receptacle (9) has a hook section (18) which is connected to the base section (17).

8. Installation device according to one of Claims 1 to 7, **characterized in that** the receptacle (9) is composed of plastic, in particular is in the form of a plastic injection-moulded part.

9. Installation device according to one of Claims 1 to 8, **characterized in that** the hook (8) is held such that it is clamped in the receptacle (9).

10. Installation device according to one of Claims 1 to 9, **characterized in that** the hook (9) has a bottom plate (10), two L-shaped hook arms (11, 12) which are connected to the said bottom plate and are oriented in an identical manner, and a clamping screw (13) which passes through the bottom plate (10) and can be brought into contact with the conductor rail (22), wherein the busbar (2) can be clamped between the conductor rail (22) and sections (16) of the hook arms (11, 12), which sections are arranged parallel to the said conductor rail.

11. Installation device according to Claim 10, **characterized in that** the hook (8) is guided in the receptacle (9) such that it can be displaced parallel to the bottom plate (10).

12. Installation device according to Claim 10 or 11, **characterized in that** the bottom plate (10) is arranged in the region of the base section (17) of the receptacle (9), and the L-shaped hook arms (10, 11) are arranged in the region of the hook section (18) of the receptacle (9).

13. Installation device according to one of Claims 5 to 12, **characterized in that** the conductor rail (22) is arranged parallel to the bottom (23) of the channel (21), and the distance of the conductor rail (22) from the bottom (23) of the channel (21) is slightly greater than the extent of the base section (17) of the receptacle (9) between the bottom (23) and the conductor rail (22).

14. Installation device according to one of Claims 4 to 13, **characterized in that** the receptacle (9) is secured between one of the end walls (28, 29) and a securing means (30), which is associated with one guide wall (24) of the guide walls (24, 25), in the functional position.

15. Installation device according to Claim 14, **characterized in that** a subregion (27) of one guide wall (24) of the guide walls (24, 25) is resiliently flexible, and this subregion (27) has a projection (30) which, in the non-tensioned position of the subregion (27), engages behind the receptacle (9) in the functional position.

## Revendications

1. Appareil d'installation électrique (1), comprenant un boîtier (7) et au moins un crochet (8) sur un côté arrière de l'appareil d'installation (1), l'appareil d'installation (1) pouvant être fixé au moyen du crochet (8) à une barre omnibus (2), le crochet (8), pour remplacer un côté de sortie de l'appareil d'installation (1), pouvant être amené d'une première position dans une deuxième position disposée à l'opposé de celle-ci, et le crochet (8) étant maintenu dans un logement (9) et pouvant être connecté à une barre conductrice (22) de l'appareil d'installation, **caractérisé en ce que** le boîtier (7) et le logement (9) sont des composants séparés, le logement (9) étant supporté de manière déplaçable dans un canal (21) du boîtier (7) et la barre conductrice (22) de l'appareil d'installation (1) s'étendant dans la direction longitudinale du canal (21), le logement (9) étant disposé avec le crochet (8) dans une position fonctionnelle dans la région de la barre conductrice (22) et étant fixé dans la direction longitudinale du canal (21), et le logement (9) étant disposé avec le crochet (8) dans une position non fonctionnelle à l'extérieur de la région de la barre conductrice (22).

2. Appareil d'installation selon la revendication 1, **caractérisé en ce que** dans la position fonctionnelle du logement (9), la barre conductrice (22) s'étend jusqu'à la limitation du logement (9) qui est tournée vers une position du logement (9) adoptée par ce dernier dans sa position non fonctionnelle.

3. Appareil d'installation selon la revendication 1 ou 2, **caractérisé en ce que** le canal (21) présente un fond (23), en particulier un fond plan (23), et deux parois de guidage (24, 25) disposées parallèlement l'une à l'autre, perpendiculairement à ce fond.

4. Appareil d'installation selon la revendication 3, **caractérisé en ce que** le canal (21) présente deux parois frontales (28, 29) disposées parallèlement l'une à l'autre, disposées perpendiculairement au fond (23) et perpendiculairement aux parois de guidage (24, 25).

5. Appareil d'installation selon l'une quelconque des revendications 1 à 4, **caractérisé en ce que** le logement (9) présente une portion de base (17) de forme parallélépipédique par rapport à son contour extérieur.

6. Appareil d'installation selon la revendication 5, **caractérisé en ce que** la portion de base (17) vient en contact avec le fond (23) dans sa position insérée dans le canal (21) et est guidée au moyen des parois de guidage (24, 25).

7. Appareil d'installation selon la revendication 5 ou 6, **caractérisé en ce que** le logement (9) présente une portion de crochet (18) connectée à la portion de base (17).

8. Appareil d'installation selon l'une quelconque des revendications 1 à 7, **caractérisé en ce que** le logement (9) se compose de plastique, en particulier est réalisé sous forme de pièce moulée par injection de plastique.

9. Appareil d'installation selon l'une quelconque des revendications 1 à 8, **caractérisé en ce que** le crochet (8) est maintenu serré dans le logement (9).

10. Appareil d'installation selon l'une quelconque des revendications 1 à 9, **caractérisé en ce que** le crochet (9) présente une plaque de fond (10), deux bras de crochet (11, 12) en forme de L connectés à celle-ci, qui sont orientés de manière identique, ainsi qu'une vis de serrage (13) traversant la plaque de fond (10), pouvant être amenée en contact avec la barre conductrice (22), la barre omnibus (2) pouvant être serrée entre la barre conductrice (22) et des portions (16) des bras de crochet (11, 12) disposées parallèlement à celle-ci.

11. Appareil d'installation selon la revendication 10, **caractérisé en ce que** le crochet (8), déplaçable parallèlement à la plaque de fond (10), est guidé dans le logement (9).

12. Appareil d'installation selon la revendication 10 ou 11, **caractérisé en ce que** la plaque de fond (10) est disposée dans la région de la portion de base (17) du logement (9) et les bras de crochet en forme de L (10, 11) sont disposés dans la région de la portion de crochet (18) du logement (9).

13. Appareil d'installation selon l'une quelconque des revendications 5 à 12, **caractérisé en ce que** la barre conductrice (22) est disposée parallèlement au fond (23) du canal (21) et la distance entre la barre conductrice (22) et le fond (23) du canal (21) est légèrement plus grande que l'étendue de la portion de base (17) du logement (9) entre le fond (23) et la barre conductrice (22).

14. Appareil d'installation selon l'une quelconque des revendications 4 à 13, **caractérisé en ce que** le logement (9) est fixé dans la position fonctionnelle entre l'une des parois frontales (28, 29) et un moyen de fixation (30) qui est associé à une paroi de guidage (24) des parois de guidage (24, 25).

15. Appareil d'installation selon la revendication 14, **caractérisé en ce qu'**une région partielle (27) d'une paroi de guidage (24) des parois de guidage (24, 25) est flexible élastiquement et cette région partielle (27) présente une saillie (30) qui vient en prise par l'arrière dans la position fonctionnelle avec le logement (9) dans la position détendue de la région partielle (27).
